# EUROPÄISCHE PATENTANMELDUNG

(11) **EP 1 375 968 A2**
(43) Veröffentlichungstag der Anmeldung: **02.01.2004**
(21) Anmeldenummer: 03013592.5
(22) Anmeldetag: 14.06.2003
(51) Int. Cl.: F16H 41/24

(54) **Getriebe mit einem hydrodynamischen Wandler**

(30) Priorität: 20.06.2002 DE 10227419
(71) Anmelder: ZF FRIEDRICHSHAFEN Aktiengesellschaft, 88038 Friedrichshafen (DE)
(72) Erfinder: Leber, Fritz, 88048 Friedrichshafen (DE)

(57) **Zusammenfassung**

Um eine Beschädigung der Wellendichtung (14) in einem Getriebe mit einem hydrodynamischen Wandler zu verhindern, ist auf der Leitradwelle (8) ein Bereich (11) angeordnet, welcher gegenüber dem Außendurchmesser (12) der Leitradwelle (8) erweitert ist und die Pumpenwelle (6) zentriert, bevor die Pumpenwelle (6) in die Wellendichtung (14) eingreift.

## Beschreibung

Die Erfindung betrifft ein Getriebe mit einem hydrodynamischen Wandler nach der im Oberbegriff von Anspruch 1 näher definierten Art.

Hydrodynamische Wandler werden häufig in Getrieben für Mobilfahrzeuge, wie z. B. Personenkraftwagen, Nutzkraftwagen oder Arbeitsmaschinen, eingesetzt, wobei die hydrodynamischen Wandler einerseits mit einem Motor und andererseits mit dem Getriebe verbunden sind. Um hierbei eine hydraulische Abdichtung gegenüber der Umgebung zu erreichen, ist häufig zwischen der Pumpenwelle des hydrodynamischen Wandlers und einem Bauteil, welches mit dem Getriebegehäuse in Verbindung steht, eine Wellendichtung angeordnet. Nach erfolgter Montage ist der hydrodynamische Wandler in seiner Endlage, und die Pumpenwelle ist über eine Lagerung im Getriebegehäuse oder einem mit dem Getriebegehäuse verbundenen Bauteil gelagert.

Die DE 41 34 396 A1 offenbart ein Getriebe mit einem hydrodynamischen Wandler, bei welchem die Pumpenwelle über eine Lagerung im Getriebe gelagert und über eine Wellendichtung gegenüber der Umgebung abgedichtet ist. Zwischen der Leitradwelle und der Pumpenwelle ist ein Spalt angeordnet. Bei der Montage des Wandlers auf das Getriebe kommt es häufig zu Beschädigungen des Wellendichtrings, da die Pumpenwelle zuerst in den Wellendichtring eingreift, bevor sie in der Lagerung gelagert wird.

Der vorliegenden Erfindung liegt die Aufgabe zugrunde, ein Getriebe mit einem hydrodynamischen Wandler zu schaffen, bei welchem die Pumpenwelle über eine Lagerung gelagert und über eine Wellendichtung abgedichtet ist und bei welchem der hydrodynamische Wandler auf einfache Weise in das Getriebe montiert werden kann, ohne die Wellendichtung zu beschädigen.

Die vorliegende Aufgabe wird mit einem, auch die kennzeichnenden Merkmale des Hauptanspruchs aufweisenden, gattungsgemäßen Getriebe mit hydrodynamischem Wandler gelöst.

Erfindungsgemäß weist der hydrodynamische Wandler eine Pumpenwelle mit einem definierten Innendurchmesser auf. Die Pumpenwelle ist zwischen dem Pumpenrad einerseits und einer hydraulischen Pumpe im Getriebe andererseits angeordnet. Im montierten Endzustand ist die Pumpenwelle über eine Lagerung im Getriebe gelagert und über eine Wellendichtung abgedichtet. Zwischen dem definierten Innendurchmesser der Pumpenwelle und einem definierten Außendurchmesser der Leitradwelle ist ein Spalt vorhanden. Im Bereich der Pumpenwelle ist auf der Leitradwelle mindestens ein Bereich angeordnet, welcher gegenüber dem Außendurchmesser der Leitradwelle so erweitert ist, dass bei Montage des Wandlers in das Getriebe der Innendurchmesser der Pumpenwelle auf diesem Bereich zentriert wird, bevor die Pumpenwelle in die Wellendichtung eingreift. Somit ist die Pumpenwelle zentriert und bei Montage des Wandlers kann die Wellendichtung nicht beschädigt werden. Vorzugsweise weist die Pumpenwelle einerseits eine Einführungsphase für die Leitradwelle am Innendurchmesser und eine Einführungsphase für die Wellendichtung am Außendurchmesser auf. Damit der Spalt zwischen Pumpenwelle und Leitradwelle in der montierten Endlage erhalten bleibt, ist in der Endlage im Bereich der Erweiterung der Leitradwelle in der Pumpenwelle eine Ausnehmung angeordnet, welche den Bereich der Leitradwelle aufnimmt. Die Ausnehmung ist vorzugsweise so ausgeführt, dass ein Spalt zwischen Leitradwelle und Pumpenwelle erhalten bleibt. Es besteht auch die Möglichkeit, den Bereich in der Pumpenwelle und die Ausnehmung in der Leitradwelle anzuordnen. Die Lage der Ausnehmung und die Lage des Bereichs der Erweiterung der Leitradwelle ist so gestaltet, dass bei der Montage des hydrodynamischen Wandlers in das Getriebegehäuse die Pumpenwelle zuerst auf dem Bereich der Leitradwelle zentriert wird, bevor die Pumpenwelle in die Wellendichtung eingreift, und der Bereich der Leitradwelle erst die Ausnehmung in der Pumpenwelle erreicht, wenn die Pumpenwelle über die Lagerung im Getriebe gelagert ist. Somit wird auf einfache Weise eine Beschädigung der Wellendichtung verhindert.

Weitere Merkmale sind der Figuren-Beschreibung zu entnehmen.

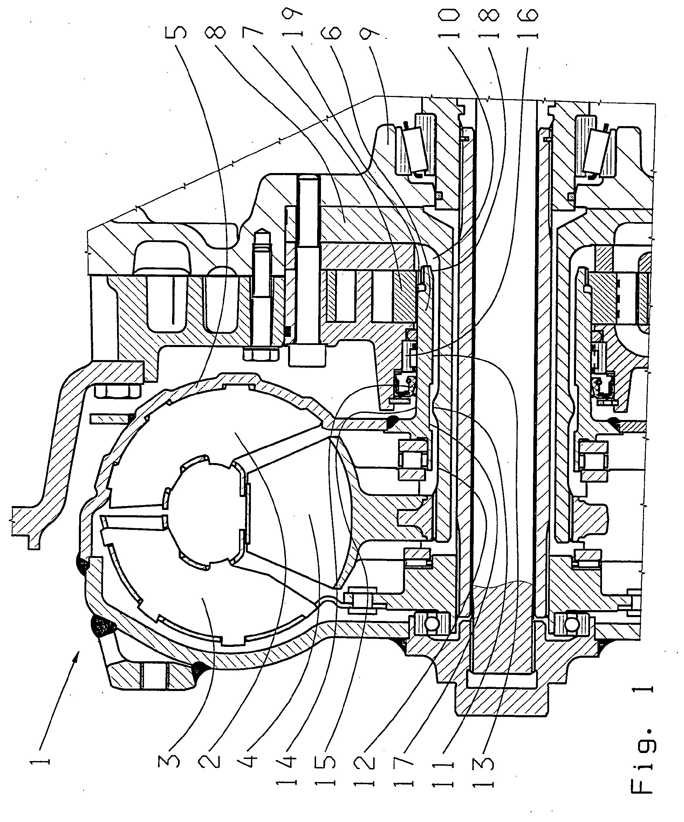

Die einzige Figur zeigt einen Ausschnitt aus einem Getriebe mit einem hydrodynamischen Wandler 1, mit einem Pumpenrad 2, einem Turbinenrad 3 und einem Leitrad 4, wobei das Pumpenrad 2 die Wandlerschale 5 aufweist. Die Pumpenwelle 6 ist mit der Wandlerschale 5 und einer hydraulischen Pumpe 7 verbunden. Die Leitradwelle 8 ist einerseits mit dem Leitrad 4 und andererseits mit dem Getriebe 9 verbunden. Zwischen der Leitradwelle 8 und der Pumpenwelle 6 ist ein Spalt 10 vorhanden. Die Leitradwelle 8 weist einen Bereich 11 auf, welcher gegenüber dem Außendurchmesser 12 der Leitradwelle 8 erweitert ist. Wird der hydrodynamische Wandler in das Getriebe montiert, so wird der Innendurchmesser 13 der Pumpenwelle 6 auf dem Bereich 11 der Leitradwelle 8 zentriert, bevor die Pumpenwelle 6 in die Wellendichtung 14 eingreift. Wird der Wandler weiter auf das Getriebegehäuse geschoben, so erreicht der Außendurchmesser 15 der Pumpenwelle 6 zuerst die Lagerung 16, bevor der Bereich 11 in die Ausnehmung 17 der Pumpenwelle 6 eingreift. Somit ist die Pumpenwelle 6 in jedem Zustand, in dem sie Kontakt mit der Wellendichtung 14 hat, zentriert. Indem der Innendurchmesser 13 eine Ausnehmung 17 aufweist, welche in der montierten Endlage des Wandlers den Bereich 11 aufnimmt, ist es möglich, einen durchgehenden Spalt zwischen der Pumpenwelle 6 und der Leitradwelle 8 auszubilden. Vorzugsweise weist die Pumpenwelle 6 eine Einführungsphase 18 zur Einführung der Pumpenwelle 6 auf den Bereich 11 und eine Phase 19 zur Einführung der Pumpenwelle 6 auf die Wellendichtung 14 auf.

### Bezugszeichen

- 1: Wandler
- 2: Pumpenrad
- 3: Turbinenrad
- 4: Leitrad
- 5: Wandlerschale
- 6: Pumpenwelle
- 7: hydraulische Pumpe
- 8: Leitradwelle
- 9: Getriebe
- 10: Spalt
- 11: Bereich
- 12: Außendurchmesser
- 13: Innendurchmesser
- 14: Wellendichtung
- 15: Außendurchmesser
- 16: Lagerung
- 17: Ausnehmung
- 18: Phase
- 19: Phase

## Patentansprüche

1. Getriebe mit einem hydrodynamischen Wandler mit einer Pumpenwelle (6), mit einem definierten Innendurchmesser (13), welche einerseits mit einem Pumpenrad (2) des Wandlers (1) und andererseits mit einer in einem Getriebegehäuse (9) angeordneten hydraulischen Pumpe (7) verbunden ist, und einem Lager (16), welches die Pumpenwelle (6) lagert, und in einer Wellendichtung (14), welche zwischen der Verbindung des Pumpenrades (2) mit der Pumpenwelle (6) und dem Lager (16) auf der Pumpenwelle (6) angeordnet ist, und einer Leitradwelle (8) mit einem definierten Außendurchmesser (12), welcher so ausgeführt ist, dass zwischen dem Außendurchmesser (12) der Leitradwelle (8) und dem Innendurchmesser (13) der Pumpenwelle (6) ein Spalt (10) besteht, **dadurch gekennzeichnet, dass** die Leitradwelle (8) über ihrer Längenausdehnung im Bereich der Pumpenwelle (6) mindestens einen Bereich (11) aufweist, welcher gegenüber ihrem Außendurchmesser (12) so erweitert ist, dass bei Montage des Wandlers in das Getriebe der Innendurchmesser (13) der Pumpenwelle (6) auf diesem zentriert wird, bevor die Pumpenwelle (6) in die Wellendichtung (14) eingreift.

2. Getriebe mit einem hydrodynamischen Wandler nach Anspruch 1, **dadurch gekennzeichnet, dass** der Innendurchmesser (13) der Pumpenwelle (6) eine Ausnehmung (17) aufweist, welche in einer Endlage des Wandlers im Getriebe den Bereich (11) der Leitradwelle aufnimmt.

3. Getriebe mit einem hydrodynamischen Wandler nach Anspruch 2, **dadurch gekennzeichnet, dass** zwischen dem Bereich (11) der Leitradwelle (8) und der Ausnehmung (17) in der Endlage ein Spalt (10) besteht.

4. Getriebe mit einem hydrodynamischen Wandler nach Anspruch 2, **dadurch gekennzeichnet, dass** der Bereich (11) der Leitradwelle (8) erst dann von der Ausnehmung (17) aufgenommen wird, wenn die Pumpenwelle (6) vom Lager (16) gelagert ist.
